# EUROPEAN PATENT SPECIFICATION

(11) **EP 1 569 379 B1**
(45) Date of publication and mention of the grant of the patent: **18.07.2007**
(21) Application number: 05250872.8
(22) Date of filing: 15.02.2005
(51) Int. Cl.: H04L 9/12

(54) **Method of generating a cryptosync**
Verfahren zur Erzeugung eines kryptographischen Synchronisationssignals
Procédé de génération d'un signal de cryptosynchronisation

(30) Priority: 26.02.2004 US 786454
(43) Date of publication of application: 31.08.2005
(73) Proprietor: LUCENT TECHNOLOGIES INC., Murray Hill, New Jersey 07974-0636 (US)
(72) Inventor: Patel, Sarvar, Montville, NJ 07045 (US); Wong, Marcus, Green Brook, NJ 08812 (US)
(74) Representative: Sarup, David Alexander

(56) References cited:
- US-A1- 2003 206 538
- US-B1- 6 249 582

## Description

### BACKGROUND OF THE INVENTION

Encryption has found wide spread use in numerous fields such as wireless communication, the internet, etc. The message, data, voice, etc. to be encrypted is usually referred to as the plaintext, and the result of the encryption process is referred to as the ciphertext. Often, the encrypting process involves performing an encryption algorithm on the plaintext to obtain the ciphertext. Many encryption algorithms such as DES, AES, etc. involve the use of a key in the encryption process. The encryption key is a bit sequence used in the encryption algorithm to generate the ciphertext. The encryption key is known at both the send and receive sides of the communication, and at the receive side is used to decrypt the ciphertext into the plaintext.

One example of encryption in the wireless communication environment involves encrypting frames of information sent between a base station and a mobile station. Unfortunately, if the same information (i.e., the same plaintext) is sent during two different frames, the same ciphertext is produced. As such information on the ciphertext is said to have leaked. This process also permits a replay attack wherein a malicious attacker sends previously sent ciphertext. Because the ciphertext will be decrypted into plaintext as opposed to meaningless text, a replay attack can weak havoc at the receiver side of the communication.

To prevent replay attacks, an encryption technique using a cryptosync has been developed. The cryptosync, for example, is a count value incremented after each use of the cryptosync for encryption. In this manner, the cryptosync changes over time. In a typical use of the cryptosync, the encryption algorithm is applied to the cryptosync as if the cryptosync were plaintext. The resulting output is referred to as a mask. The mask then undergoes an exclusive-or operation with the information (e.g., voice, data, etc.) for encryption to generate the ciphertext. As with encryption keys, the cryptosync is known at both the send and receive sides, and at the receive side is used to decrypt the ciphertext into the plaintext.

As will be appreciated, the cryptosync changes with each use such that even if the information remains the same, for example, over different frames of a communication session, the resulting ciphertext does change. For example, document US 2003/206538 discloses a method comprising deriving a value of a first cryptosync based on a value of a second cryptosync, the second cryptosync having a longer life than the first cryptosync.

### SUMMARY OF THE INVENTION

The present invention provides a method of generating a cryptosync such as for use in a communication session between two communication devices. ,

If a cryptosync is out of sync, lost, etc., the cryptosync may be reset. However, re-synchronizing a cryptosync by setting the cryptosync to a same value each time defeats the purpose behind using a cryptosync. For example, if for each new communication session, the cryptosync is reset to the same value or to a value that was previously used while the encryption key remains unchanged and the same information is transmitted at the beginning of each communication session, then the same ciphertext may be generated.

In one embodiment of the present invention, a cryptosync for use such as in a communication session is derived from a second cryptosync. The second cryptosync changes between communication sessions such that the derived cryptosync changes for each communication session.

In one exemplary embodiment, the cryptosync is derived as at least a portion of the second cryptosync. For example, the cryptosync may be derived as at least a portion of the second cryptosync and a fixed bit sequence.

In another exemplary embodiment, a pseudo-random function is performed on the second cryptosync, and the derived cryptosync is derived from the output of the pseudo-random function.

### BRIEF DESCRIPTION OF THE DRAWINGS

The present invention will become more fully understood from the detailed description given herein below and the accompanying drawings, wherein like elements are represented by like reference numerals, which are given by way of illustration only and thus are not limiting of the present invention and wherein:

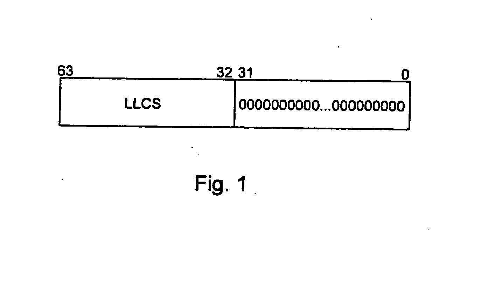

Fig.1 illustrates the formation of a short-lived cryptosync from a long-lived cryptosync according to one embodiment of the present invention.

### DETAILED DESCRIPTION OF THE EMBODIMENTS

For ease of understanding and simplicity of description, the embodiments of the present invention will be described in the context of wireless communication such as according to the family of CDMA2000 standards. However, it should be understood that the methodologies described are not limited to this communication standard or to wireless communication.

In wireless communication, mobile stations communicate with base stations over the air. A mobile station may be a mobile phone, wireless computer, etc. The base station services a geographic area; namely, services communication to and from mobile stations in the geographic area. Often this communication is encrypted. In CDMA2000, for example, there exist several long lived keys such as a cipher key (CK) and an integrity key (IK) associated with a mobile station that are used in the encryption processes and messaging integrity protection processes, respectively. CDMA2000 also provides for, relatively speaking, a long lived cryptosync (e.g., TX_EXT_SSEQ and RX_EXT_SSEQ in CDMA2000). The long-lived cryptosync (LLCS) is used to encrypt and decrypt messages (e.g., signaling messages) between the base station and mobile station, to verify message integrity, or both. After each use, the LLCS is incremented in the usual fashion so that the ciphertext generated using the LLCS is resistant to replay attacks. Initially, upon need or request, the LLCS may be derived using any well-known authentication protocol such as set forth in CDMA2000.

Besides the usual voice communication, CDMA2000 and other standards also provide for data communication (e.g., internet surfing, email downloads, etc.). The communication channel for communicating information (e.g., voice, data, etc.) between the base station and mobile station is often referred to as the radio link, and one protocol for data communication, for example, is referred to as the radio link protocol (RLP). To establish an RLP communication, a communication channel between the mobile station and base station is established in a well-known manner such as through message integrity using the LLCS. When the RLP communication ends, the communication channel is torn down. The time during which the communication channel existed for communication of information (e.g., voice, data, etc.) is referred to generally as the communication session.

During a communication session, several frames as defined by the RLP may be communicated. According to the present invention, each frame is encrypted using what will be referred to herein as a short-lived cryptosync (SLCS). The SLCS is short lived in comparison to the LLCS in that the life of the SLCS is limited to the duration of the communication session. Namely, as will be described in detail below, a value for the SLCS is newly derived for the next communication session.

By contrast, the life of the LLCS is not limited to a single RLP session. For example, in CDMA2000, the natural life of the LLCS is tied to the duration of the cipher key (CK) and an integrity key (IK). For example certain types of registration (e.g., registration at a new visiting location register VLR), result in a new CK and a new IK. Accordingly, this ends the life of the previous CK and IK, and along with it, the life of the LLCS associated with those keys. Additionally, events such as the mobile station powering down and losing the LLCS may terminate the life of the LLCS. In general, however, the life of the LLCS extends over multiple communication sessions. Stated another way, the LLCS continues in use during and after expiration of an SLCS. As will be appreciated in detail below, the methodologies of the present invention exploit this difference between the SLCS and the LLCS.

The LLCS changes between communication sessions in part because the message used to initiate a communication session is integrity protected using the LLCS. As such, the value of the LLCS is incremented after each use, and in at least this manner, the LLCS will have a different value for each communication session. It will be appreciated that as a result of other uses of the LLCS, further incrementing of the LLCS may occur between communication sessions Because, as described in detail below, the SLCS is derived from the LLCS, the SLCSs derived for different communication sessions will have different values; thus, helping to prevent a replay attack.

According to one embodiment of the present invention, the SLCS is derived using a portion of or the entirety of the LLCS. Fig. 1 illustrates an example of an SLCS according to this embodiment. In the example shown in Fig. 1, it is assumed that the SLCS has a length greater than the length of the LLCS. More particularly, the example of Fig. 1 assumes the case of a 64 bit SLCS and a 32 bit LLCS. As shown, the most significant 32 bits of the SLCS are the 32 bits of the LLCS. The remaining, least significant 32 bits of the SLCS are a fixed bit stream. In the case of Fig. 1, the fixed bit stream is a string of all 0s.

As will be appreciated, the fixed bit stream need not be all 0s or all 1s. Furthermore, instead of using the entirety of the LLCS to form a portion of the SLCS, only a portion of the LLCS may be used; however, it will be appreciated that this may not offer the highest degree of protection against repeating the SLCS.

According to another embodiment of the present invention, any well-known pseudo-random function may be applied to the LLCS. The result is then used to generate the SLCS. For example, the resulting pseudo-random number may be used in the same manner as the LLCS in the previously described embodiment to generate the SLCS. Alternatively, the resulting pseudo-random number may be used as the SLCS.

It will be appreciated that further numerous variations for deriving the SLCS from the LLCS may exist.

Because the same LLCS is known at both the mobile station and base station, the same SLCS is derived for the communication session therebetween. The derived SLCS is then used in the conventional manner to encrypt a frame of information at the send side (base station or mobile station) and decrypt the frame of information at the receive side (mobile station or base station). After each encryption and decryption, the value of the SLCS is incremented and used for encryption and decryption of the next frame. When the communication session ends, so ends the life of the SLCS. For the next communication session, the SLCS is derived anew as described in detail above.

## Claims

1. A method of generating a cryptosync for a communication session between two communication devices, comprising:
deriving a value of a first cryptosync for the communication session, has based on a value of a second cryptosync (LLCS), has
**characterized in that** the first cryptosync has a life limited to the communication session and **in that** the second cryptosync has a life extending over multiple communication sessions.

2. The method of claim 1, wherein the second cryptosync is used for message encryption by at least one of the two devices.

3. The method of claim 1, wherein the second cryptosync is used for verifying message integrity by at least one of the two devices.

4. The method of claim 1, wherein said value of the second cryptosync changes between communication sessions.

5. The method of claim 1, wherein the deriving step derives said value of the first cryptosync as at least a portion of said value of the second cryptosync.

6. The method of claim 5, wherein the deriving step derives a first portion of said value of the first cryptosync as said value of the second cryptosync and derives a second portion of said value of the first cryptosync as a fixed bit sequence.

7. The method of claim 6, wherein the fixed bit sequence is a string of 0s.

8. The method of claim 1, wherein the deriving step comprises:
performing a pseudo-random function on said value of the second cryptosync; and
generating said value of the first cryptosync from output of the pseudo-random function.

9. The method of claim 8, wherein the generating step generates said value of the first cryptosync as the output of the pseudo-random function.

10. The method of claim 1, further comprising:
one of encrypting and decrypting a frame of information using the first cryptosync.

## Patentansprüche

1. Verfahren zum Erzeugen eines Cryptosync für eine Kommunikationssitzung zwischen zwei Kommunikationseinrichtungen, mit dem folgenden Schritt:
Ableiten eines Werts eines ersten Cryptosync für die Kommunikationssitzung auf der Basis eines Werts eines zweiten Cryptosync (LLCS), **dadurch gekennzeichnet, daß** das erste Cryptosync eine auf die Kommunikationssitzung beschränkte Lebensdauer aufweist und daß das zweite Cryptosync eine sich über mehrere Kommunikationssitzungen erstreckende Lebensdauer aufweist.

2. Verfahren nach Anspruch 1, wobei das zweite Cryptosync zur Nachrichtenverschlüsselung durch mindestens eine der zwei Einrichtungen verwendet wird.

3. Verfahren nach Anspruch 1, wobei das zweite Cryptosync zur Verifikation der Nachrichtenintegrität durch mindestens eine der zwei Einrichtungen verwendet wird.

4. Verfahren nach Anspruch 1, wobei sich der Wert des zweiten Cryptosync zwischen Kommunikationssitzungen ändert.

5. Verfahren nach Anspruch 1, wobei der Schritt des Ableitens den Wert des ersten Cryptosync als mindestens einen Teil des Werts des zweiten Cryptosync ableitet.

6. Verfahren nach Anspruch 5, wobei der Schritt des Ableitens einen ersten Teil des Werts des ersten Cryptosync als den Wert des zweiten Cryptosync ableitet und einen zweiten Teil des Werts des ersten Cryptosync als eine feste Bitsequenz ableitet.

7. Verfahren nach Anspruch 6, wobei die feste Bitsequenz eine Kette von 0en ist.

8. Verfahren nach Anspruch 1, wobei der Schritt des Ableitens folgendes umfaßt:
Ausführen einer Pseudozufallsfunktion an dem Wert des zweiten Cryptosync; und
Erzeugen des Werts des ersten Cryptosync aus der Ausgabe der Pseudozufallsfunktion.

9. Verfahren nach Anspruch 8, wobei der Schritt des Erzeugens den Wert des ersten Cryptosync als die Ausgabe der Pseudozufallsfunktion erzeugt.

10. Verfahren nach Anspruch 1, ferner umfassend:
Verschlüsseln oder Entschlüsseln eines Informationsrahmens unter Verwendung des ersten Cryptosync.

## Revendications

1. Procédé de génération d'un signal de cryptosynchronisation pour une session de communication entre deux dispositifs de communication, comprenant:
la dérivée d'une valeur d'un premier signal de cryptosynchronisation pour la session de communication, **caractérisé en ce que** le premier signal de cryptosynchronisation a une durée de vie limitée à la session de communication basé sur une valeur d'un second signal de cryptosynchronisation (LLCS), et **en ce que** le second signal de cryptosynchronisation a une durée de vie s'étendant sur de multiples sessions de communication.

2. Procédé selon la revendication 1, dans lequel le second signal de cryptosynchronisation sert au cryptage des messages par au moins l'un des deux dispositifs.

3. Procédé selon la revendication 1, dans lequel le second signal de cryptosynchronisation sert à la vérification de l'intégrité des messages par au moins l'un des deux dispositifs.

4. Procédé selon la revendication 1, dans lequel ladite valeur du second signal de cryptosynchronisation change entre les sessions de communication.

5. Procédé selon la revendication 1, dans lequel l'étape de dérivée dérive ladite valeur du premier signal de cryptosynchronisation en tant qu'au moins une partie de la valeur du second signal de cryptosynchronisation.

6. Procédé selon la revendication 5, dans lequel l'étape de dérivée dérive une première partie de ladite valeur du premier signal de cryptosynchronisation en tant que dite valeur du second signal de cryptosynchronisation et dérive une seconde partie de ladite valeur du premier signal de cryptosynchronisation en tant que séquence binaire fixe.

7. Procédé selon la revendication 6, dans lequel la séquence binaire fixe est une chaîne de 0.

8. Procédé selon la revendication 1, dans lequel l'étape de dérivée comprend :
l'exécution d'une fonction pseudo-aléatoire sur ladite valeur du second signal de cryptosynchronisation ; et
la génération de ladite valeur du premier signal de cryptosynchronisation à partir de la sortie de la fonction pseudo-aléatoire.

9. Procédé selon la revendication 8, dans lequel l'étape de génération génère ladite valeur du premier signal de cryptosynchronisation en tant que sortie de la fonction pseudo-aléatoire.

10. Procédé selon la revendication 1, comprenant en outre :
l'un du cryptage et du décryptage d'une trame d'informations en utilisant au moins le premier signal de cryptosynchronisation.
